# EUROPEAN PATENT SPECIFICATION

(11) **EP 0 508 394 B1**
(45) Date of publication and mention of the grant of the patent: **15.01.1997**
(21) Application number: 92106054.7
(22) Date of filing: 08.04.1992
(51) Int. Cl.: H04N 7/16

(54) **Method for controlling a recording device**
Verfahren zur Steuerung von einem Aufzeichnungsgerät
Procédé pour la commande d'un dispositif d'enregistrement

(30) Priority: 12.04.1991 EP 91400989
(43) Date of publication of application: 14.10.1992
(73) Proprietor: THOMSON multimedia, 92400 Courbevoie (FR)
(72) Inventor: Diehl, Eric, F-67100 Strasbourg (FR); Hamon, Joel, F-67640 Lipshem (FR)
(74) Representative: Hartnack, Wolfgang, Dipl.-Ing.

(56) References cited:
- WO-A-83/03329
- WO-A-87/06416
- WO-A-90/01847
- GB-A- 2 210 526
- GB-A- 2 215 928

## Description

The present invention relates to a method for controlling a recording device.

### Background

In order to record automatically a TV program, the use of timer and programming features of a VCR (video cassette recorder) are mandatory. In case of a pay TV program, both devices, VCR and decoder, have to be working at the same time. Furthermore the use of a timer presumes that the program will be broadcast at the originally scheduled time.
In GB-A-2 215 928 program identification data of a pay TV system are used to command a recorder via an infra-red link.
In WO-A-8 706 416 program identification data of a TV system are used to command a recorder via an infra-red link.
Neither of these documents shows that the recorder quits a remote control command and that a smart card is used for checking entitlement of the recording and for searching further entitled programs if the smart card is not currently needed for the recording.

### Invention

It is one object of the invention to disclose a method of controlling a recording device without needing timer and programming features of the recording device.
This object is reached by the inventive method disclosed in claim 1.

The new generation of pay TV systems uses data transmission in order to transfer the information needed for descrambling and deciphering. Currently for the control access system the information describing the identity of the broadcast program is transmitted among these data.

In a modified pay TV decoder an IR (infra-red) transmitter diode at an output of the pay TV decoder controls via an IR link any VCR equipped with an IR remote control. The pay TV decoder will emulate the IR hand set normally used for controlling the VCR. Due to the specificity of the recorded programs some advantageous functions can be added. There is no interest to record a program the user is not entitled to view. For that purpose a smart card which is necessary to have access to the broadcasted TV program will be used to propose only the entitled programs to the customer selection. The following specific selection modes can be implemented:
Automatic mode:
   If the smart card is not currently needed for a recording, it checks automatically every channel in order to find the first one broadcasting an entitled program and then switches the pay TV decoder or the VCR to that channel and requests recording.
List mode:
   The smart card is used to propose (display) every entitled program to the user for selection.
Channel mode:
   The smart card is used to propose (display) every entitled channel to the user for selection. The card will then be used to record only entitled programs broadcasted on the selected channel.
Theme mode:
   The smart card is used to propose (display) every entitled themes to the user for selection. The card will then be used to record only entitled programs belonging to that theme and broadcasted on every channel.
Time optimizer mode:
   This mode can be implemented only on pay TV services where there is a way to examine the foreseen schedule for each channel, for instance D2MAC. The user enters the total play time of a VCR tape and the smart card is used to choose a program selection (e.g. of equal theme) which will optimize the use of this tape over a specific period, e.g. a day. The total play time of the tape can also be entered automatically with different known methods.

In principle the inventive method consists in using program identification data of a pay TV system to command a recording device, whereby a pay TV decoder can evaluate the program identification data and the recording device can be commanded via an infra-red link between the pay TV decoder and the recording device.

Advantageous additional embodiments of the inventive method are resulting from dependent claims 2 to 9.

In principle the inventive apparatus consists in a microcontroller which is connected to a tuner, to a de-scrambling stage, to an access control unit, to an user interface, to a memory and to a current source, whereby said tuner receives TV RF signals and said microcontroller controls the frequency of said tuner and whereby the scrambled and demodulated video and/or audio signals become de-scrambled in said de-scrambling stage and the de-scrambled video and audio signals can be fed to respective inputs of said recording device and whereby a user can select an authorized program through said user interface and whereby infra-red code sequences can be stored in and read out from said memory and whereby said access control unit extracts the program information from the data stream which is send for descrambling and whereby said microcontroller CPU extracts said code sequences from said memory, translates them and sends the according waveform to said current source which drives one or more infra-red transmitter diodes.

### Drawing

Preferred embodiments of the invention will now be described with reference to the accompanying drawing:

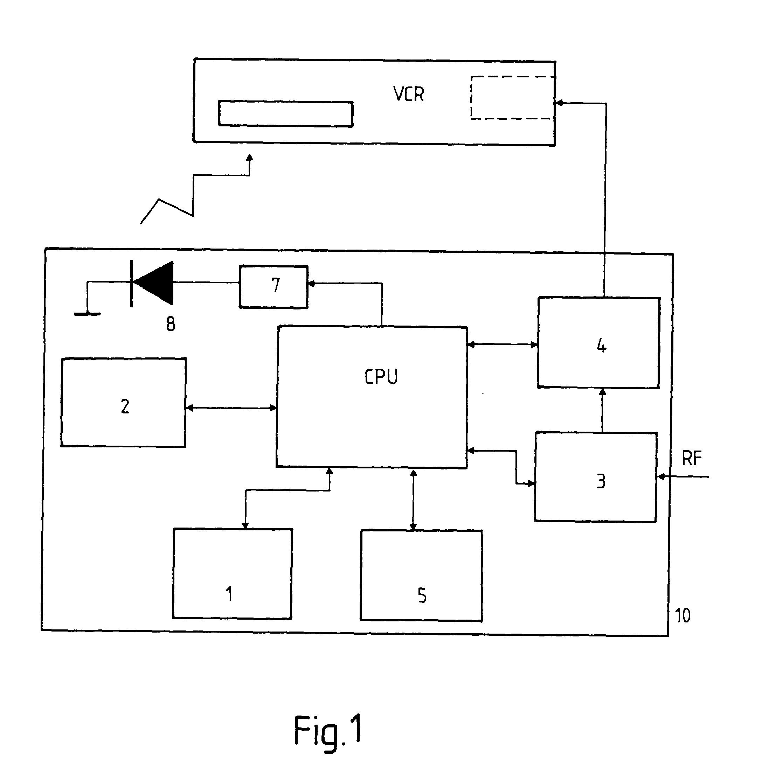

- Fig. 1: shows a video tape recorder which is controlled by the inventive pay TV decoder.

### Preferred embodiments

A RF signal received from antenna or cable is fed to a tuner 3 of a pay TV decoder 10. The scrambled and demodulated video and/or audio signals become de-scrambled in a de-scrambling stage 4. The de-scrambled video and audio signals are fed to the respective inputs of a video cassette recorder VCR. The output of de-scrambling stage 4 may be provided with a modulator which converts the received RF frequency to a fixed RF frequency.
The tuner 3, the de-scrambling stage 4, an access control unit 5, an user interface 1, a memory 2 and a current source 7 are connected to a microcontroller CPU.
The user may be able to select for recording any authorized program or all of them on any scrambled channel. This is performed through the user interface 1 and memorized in the non volatile memory 2. This selection can be changed at any time. The microcontroller controls the frequency of tuner 3.
The access control unit 5 extracts the program information from the data stream which is send for descrambling. This data stream is split from the video data in de-scrambling stage 4 and evaluated by microcontroller CPU. If the currently broadcasted program has been selected by the user for recording, the microcontroller will extract from memory 2 the relevant information necessary to play a sequence of keys of the VCR.
This information can be stored in memory 2 under several formats: Real bit description of the waveform (PCM) or compression format in order to reduce the amount of memory capacity necessary to play back the code. It is very important to use a sequence of keys in order to record. This sequence and the format and code used depend only from the type of VCR.

It is recommended to allocate a predefined fixed programme number in the VCR, tuned on the frequency of the modulator in de-scrambling stage 4.

The sequence of action for recording is typically:
- wake up the VCR (change from stand-by mode to normal operation mode);
- tuning to modulator frequency in de-scrambling stage 4;
- record.

In the same way the pay TV decoder 10 will stop the recording at the end of the program by playing an appropriate sequence of keys.

The microcontroller CPU extracts the IR code data from memory 2, translates them and sends the right waveform to the current source 7 or to another output which may be connected via cable to the VCR. The current source 7 drives one or more IR transmitter diodes 8. The VCR may quit if it has received a valid code which can be verified by the microcontroller.

If several scrambled channels are broadcasted, different policies can be used. In the data stream of each channel is present a list of all broadcasted programs. The pay TV decoder 10 may then select the desired channel. Else it may switch from one channel to an other until it finds a service to be recorded.

The data used to send the IR codes can be loaded to the pay TV decoder by different ways, for instance:
- over the air addressing;
- down loading by an RS 232 link;
- down loading by a smart card, e.g. a special smart card which is used by an installer;
- down loading by an IR link in a predefined format.

This method obliges the program provider to have a data base which contains the sequence of codes for each type of VCR. He will also have to update this data base for all new IR codes of VCR's appearing on the market.

An other method is to provide a learning facility inside the pay TV decoder which would allow the user or an installer to store the code sequences by playing them to the pay TV decoder, advantageously by using the remote control of the VCR. The decoder will receive the codes, eventually analyze and compress them and store the respective IR code sequences inside memory 2.

Special programs, e.g. for lawyers, doctors or ethnic minorities, can be broadcasted during night time.
To diagnose possible failures during the broadcast period an event report can automatically be produced. This report summarizes the events that occurred during the night. The user has the possibility of consulting this report from an on-screen display menu:

### EVENTS REPORT:

R666 F333
*902 *722
*903 F120
F001
F002
R099
PUSH ANY KEY

This example shows that services 666 and 099 were recorded, services 001, 002, 333 and 120 failed having been stopped by the user, services 902, 903 and 722 have not yet been recorded. If there had been a power shut-down during the period, this would also have been shown on the events report. In addition the program provider can block a particular service for a particular user by sending an over-the-air black list command, which would be shown by a 'B' against the service.

This event report can be stored on the smart card to record a trace of any faults, allowing for the possibility of the user or a service engineer to diagnose the fault. Storing the report on the smart card also allows the service center to diagnose the problem.

## Claims

1. Method for controlling a recording device (VCR) which is commanded via an infra-red link, wherein program identification data of a pay TV system are evaluated in a pay TV decoder (10) and the entitlement to descramble a desired program to be recorded is checked (5) and in case of allowed entitlement said program identification data are used to command said recording device, **characterised** in that:
- for checking said entitlement a smart card is used in said pay TV decoder (10);
- before recording said desired program, said recording device (VCR) is switched from a stand-by mode to a normal operation mode whereby said recording device acknowledges this command;
- after recording said desired program, said recording device is switched from the normal operation mode to the stand-by mode whereby said recording device acknowledges this command;
- said smart card is used for searching further entitled programs if the smart card is not currently needed for the recording.

2. Method according to claim 1, wherein an event report is produced automatically and is stored on said smart card.

3. Method according to claim 1 or 2, wherein said pay TV decoder (VCR) emulates said infra-red link from a hand set which can be used to command said recording device (VCR).

4. Method according to any of claims 1 to 3, wherein said pay TV decoder (10) stores code sequences for commanding the recording device in a memory, especially in a compressed format.

5. Method according to claim 4, wherein said pay TV decoder (10) can work in a learning mode and said code sequences are received either from data transmitted together with the TV signal received from said pay TV decoder or from data generated in a computer device transmitted via a RS232 link or from a smart card or from an infra-red link, especially by using said hand set which can be used to command said recording device.

6. Method according to any of claims 1 to 5, wherein said recording device (10) is a video cassette recorder.

## Patentansprüche

1. Verfahren zur Steuerung von einem Aufzeichnungsgerät (VCR) über eine Infrarotverbindung, wobei die Programmkennung eines Pay-TV-Senders in einem Pay-TV-Decoder (10) ausgewertet und die Berechtigung, ein zur Aufnahme bestimmtes Programm zu entwürfeln, überprüft (5) und besagte Programmkennung zur Steuerung des besagten Aufzeichnungsgerätes benutzt wird, sofern eine Zugangsberechtigung vorliegt, **gekennzeichnet durch folgende Merkmale:**
- zur Überprüfung besagter Zugangsberechtigung wird eine Smart Card in besagtem Pay-TV-Decoder (10) benutzt;
- vor dem Aufzeichnen besagten gewünschten Programms wird das besagte Aufzeichnungsgerät (VCR) vom Standby-Modus in den normalen Betriebsmodus geschaltet, wobei besagtes Aufzeichnungsgerät diesen Befehl bestätigt;
- nach dem Aufzeichnen besagten gewünschten Programms wird das besagte Aufzeichnungsgerät vom normalen Betriebsmodus in den Standby-Modus geschaltet, wobei besagtes Aufzeichnungsgerät diesen Befehl bestätigt;
- diese besagte Smart Card wird verwendet um nach weiteren Programmen zu suchen, **für die eine Zugangsberechtigung** besteht, wenn die Smart Card nicht gerade für die Aufzeichnung benötigt wird.

2. Verfahren nach Anspruch 1, wobei automatisch ein Ereignisprotokoll erstellt und auf besagter Smart Card gespeichert wird.

3. Verfahren nach Anspruch 1 oder 2, wobei besagter Pay-TV-Decoder (10) besagte Infrarotverbindung von einer Fernbedienung emuliert, die zur Steuerung des besagten Aufzeichnungsgerätes (VCR) benutzt wird.

4. Verfahren nach einem der Ansprüche 1 bis 3, wobei besagter Pay-TV-Decoder (10) Code-Sequenzen zur Steuerung des Aufzeichnungsgerätes vor-nehmlich in einem komprimierten Format in einem Speicher ablegt.

5. Verfahren nach Anspruch 4, wobei besagter Pay-TV-Decoder (10) in einem Lernmodus arbeiten kann und der Pay-TV-Decoder die besagten Code-Sequenzen entweder den mit dem Fernsehsignal übertragenen Daten entnimmt oder den in einem Rechner erzeugten Daten, die über einen RS-232-Anschluß übertragen werden, oder diese über eine Smart Card oder eine Infrarotverbindung erhält, und zwar vornehmlich durch Benutzung besagter Fernbedienung, die zur Steuerung besagten Aufzeichnungsgerätes verwendet werden kann.

6. Verfahren nach einem der Ansprüche 1 bis 5, wobei besagtes Aufzeichnungsgerät (10) ein Videokassettenrecorder ist.

## Revendications

1. Procédé pour la commande d'un dispositif d'enregistrement (magnétoscope) qui est commandé par l'intermédiaire d'une liaison infrarouge, dans lequel des données d'identification de programmes d'un système de télévision payante sont évaluées dans un décodeur de télévision payante (10) et l'autorisation à débrouiller un programme désiré pour l'enregistrer est vérifiée (5) et en cas d'autorisation lesdites données d'identification de programmes sont utilisées pour commander ledit dispositif d'enregistrement, caractérisé en ce que:
- pour vérifier ladite autorisation une carte intelligente est utilisée dans ledit décodeur de télévision payante (10);
- avant d'enregistrer ledit programme désiré, ledit dispositif d'enregistrement (magnétoscope) est commuté d'un mode de veille à un mode de fonctionnement normal, ledit dispositif d'enregistrement accusant réception de cette commande;
- après l'enregistrement dudit programme désiré, ledit dispositif d'enregistrement est commuté depuis le mode de fonctionnement normal sur le mode de veille, ledit dispositif d'enregistrement accusant réception de cette commande;
- ladite carte intelligente est utilisée pour rechercher d'autres programmes autorisés si la carte intelligente n'est pas en cours d'utilisation pour l'enregistrement.

2. Procédé conformément à la revendication 1, dans lequel un rapport d'événements est produit automatiquement et est mémorisé sur ladite carte intelligente.

3. Procédé conformément à la revendication 1 ou 2, dans lequel ledit décodeur de télévision payante (10) émule ladite liaison infrarouge provenant d'un combiné qui peut être utilisé pour commander ledit dispositif d'enregistrement (VCR).

4. Procédé conformément à l'une quelconque des revendications 1 à 3, dans lequel ledit décodeur de télévision payante (10) mémorise les séquences de codes pour commander le dispositif d'enregistrement dans une mémoire, spécialement dans un format comprimé.

5. Procédé conformément à la revendication 4, dans lequel ledit décodeur de télévision payante (10) peut fonctionner dans un mode d'apprentissage et lesdites séquences de codes sont reçues soit à partir de données transmises avec le signal télévisuel reçu dudit décodeur de télévision payante soit à partir de données générées dans un dispositif d'ordinateur transmises par l'intermédiaire d'une liaison RS 232 ou à partir d'une carte intelligente ou à partir d'une liaison infrarouge, spécialement en utilisant ledit combiné qui peut être utilisé pour commander ledit dispositif d'enregistrement.

6. Procédé conformément à l'une quelconque des revendications 1 à 5, dans lequel ledit dispositif d'enregistrement (10) est un magnétoscope.
